# EUROPÄISCHE PATENTSCHRIFT

(11) **EP 0 507 301 B1**
(45) Veröffentlichungstag und Bekanntmachung des Hinweises auf die Patenterteilung: **22.06.1994**
(21) Anmeldenummer: 92105697.4
(22) Anmeldetag: 02.04.1992
(51) Int. Cl.: B29C 37/02

(54) **Entgratungseinrichtung für eine Reifenentgratungsmaschine oder dergleichen**
Trimming device for a tire trimming apparatus of the like
Dispositif d'évaburage pour un appareil d'évaburage de pneus ou similaire

(30) Priorität: 04.04.1991 DE 4110925
(43) Veröffentlichungstag der Anmeldung: 07.10.1992
(73) Patentinhaber: Linde Aktiengesellschaft, 65189 Wiesbaden (DE)
(72) Erfinder: Rebhan, Dieter, Ing. (grad.), W-8192 Geretsried-Gelting (DE)
(74) Vertreter: Schaefer, Gerhard, Dr.

(56) Entgegenhaltungen:
- DE-A- 2 529 581

## Beschreibung

Die Erfindung betrifft eine Entgratungseinrichtung für eine Reifenentgratungsmaschine mit Schneid- oder Abriebwerkzeugen.

Reifen werden durch Vulkanisation einer entsprechenden Ausgangsmasse in Formen hergestellt. Dabei wird überschüssige Ausgangsmasse aus der gestaltgebenden Form beim Herstellungsprozeß ausgetrieben und verbleibt in Gestalt von auf dem Reifenprodukt aufsitzenden, länglichen Noppen mit dem Reifenprodukt fest verbunden. Diese Noppen sowie auch andere vom Herstellungsprozeß noch überstehende Teile, z.B. Filmaustriebe und Entlüftungsnoppen - auch auf den Reifenseitenflächen - sind jedoch zur endgültigen Fertigstellung der erzeugten Reifen zu entfernen.

Hierzu ist bislang das Abschneiden oder Abtrennen mit speziellen Schneidwerkzeugen gängig, wobei aber die bei Abnützung der Schneidwerkzeuge entstehende Werkzeugwechselzeit sowie unsaubere Bearbeitung aufgrund nicht vollkommen exakter Führung und Konturanpassung der Schneidwerkzeuge an den jeweiligen Reifen Probleme darstellen.

Eine diesbezügliche Vorrichtung, die auf dem Bearbeitungsprinzip Kaltverspröden und Schneiden oder Brechen der vorstehenden Noppen und Grate beruht, ist aus der DE-OS 31 50 901 bekannt. Die Entfernung der überstehenden Teile und Noppen erfolgt gemäß dieser Offenlegungsschrift durch teilweises Eintauchen der Reifen in ein tiefkaltes Flüssiggas und daraus resultierender Versprödung dieser Noppen und Grate, welche im folgenden durch spezielle Werkzeuge oder Einrichtungen abgetragen werden. Die Abtrennung der Noppen und Grate kann durch Stösel, Schneid- oder Brechkanten, Walzen oder Abstreifflächen erfolgen, die geeignet an die zu bearbeitenden Reifen heranzuführen sind. Dabei sind vorwiegend die Laufflächen der Reifen sowie die seitlich daran angrenzenden Bereiche zu bearbeiten.

Hierbei ergibt sich das Problem, daß die Werkzeuge nur in begrenztem Ausmaß an die jeweilige Bedürfnisse anpaßbar sind, da häufig unterschiedliche Reifentypen nacheinander zu bearbeiten sind und diese Werkzeuge nicht gleichzeitig konturpassend für verschiedene Reifengrößen ausgelegt werden können. Dadurch ergeben sich - vor allem auf den an die Lauffläche der Reifen sich anschließenden Seitenflächen - Bearbeitungsmängel.

Aus diesen Nachteilen heraus ergibt sich die Aufgabenstellung zu vorliegender Erfindung, nämlich eine weitgehend mängelfrei arbeitende Entgratungseinrichtung für entsprechende Entgratungsanlagen zu schaffen, die insbesondere die besagten Nachteile überwindet.

Diese Aufgabe wird mit einer Entgratungeinrichtung gelöst, bei der die Schneid- oder Abriebwerkzeuge auf einem mit einem Druckmedium füllbaren Balg 2 angeordnet sind, der seinerseits mit einer Halterung verbunden ist, die ihn in aufgeblasenem Zustand in einer hinsichtlich der zu entgratenden Fläche geeigneten Orientierung hält, wobei der Balg eine Zuleitung besitzt, mit der jederzeit das Druckmedium zu- bzw. abführbar ist und wobei die Halterung mit dem Balg mit einer Haltekonstruktion gekoppelt ist, mit der sie an die zu entgratenden Reifen heranführbar ist.

Mit dem mit Schneid- oder Abriebwerkzeugen besetzten Balg wird ein neuartiges Entgratungswerkzeug vorgeschlagen, das in besonderer Weise an veschiedene Reifenkonturen anpassungsfähig ist. Dies beruht auf dem mit einem Druckmedium - gewöhnlich Luft - gefüllten und trotzdem nachgiebigen Balg, der an die zu entgratende Fläche mit einer passend zu wählenden Kraft angepreßt wird und dabei vorzugsweise mit Drücken von 1 bis 3 bar gefüllt ist, wobei der Druck bei Bedarf auch im Einsatz geeignet variiert werden kann.

Günstig hat sich eine Entgratungseinrichtung herausgestellt, bei der die Halterung für den Balg aus einer Basisplatte mit aufgesetzten Flanschen besteht, wobei der Balg in dem aus der Basisplatte und den Flanschen gebildeten Kanal befestigt ist.

Ebenso geeignet ist eine Entgratungseinrichtung, bei der die Halterung aus einem halbrohrartigen Element gebildet und der Balg innenseitig befestigt ist.

Besonders vorteilhaft ist eine Entgratungseinrichtung, bei der die Haltekonstruktion für die Halterung mit Balg pneumatisch oder hydraulisch bewegbar ausgebildet ist. Bei dieser Ausgestaltung besteht neben der Anpassungsfähigkeit des Balgkissens zusätzlich die Möglichkeit, über die Hydraulik oder Pneumatik für eine geeignete Grundpositionierung des Entgratungsbalges zu sorgen, diese gegebenenfalls auch zu variieren und so für eine optimale Anpassung an die jeweilige Reifenkontur - insbesondere bei wechselnden Reifengrößen - zu sorgen.

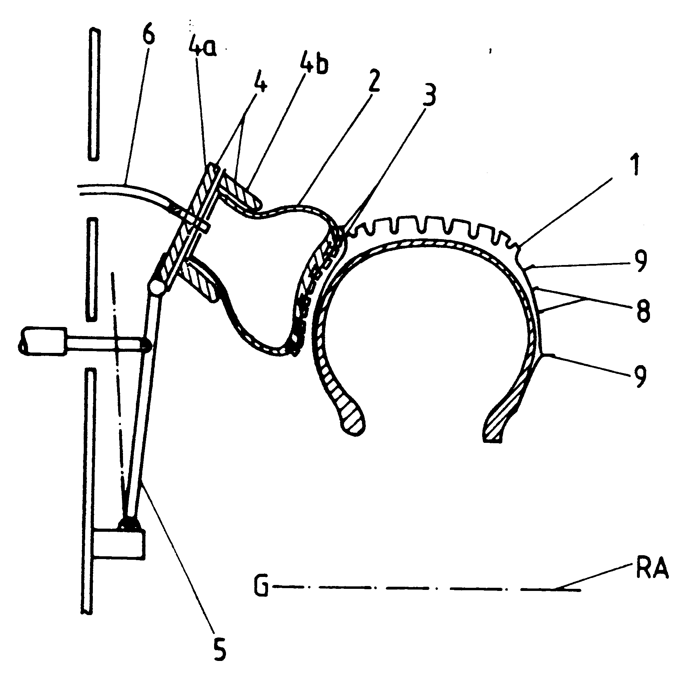

Anhand der Zeichnung sei eine erfindungsgemäße Entgratungseinrichtung beispielhaft näher beschrieben:

Die Figur zeigt schematisch eine beispielsweise in eine Reifenentgratungsanlage installierte Entgratungseinrichtung.

Gezeigt ist - im Querschnitt - ein Reifen 1 , an den sich ein Balg 2 mit Schneidwerkzeugen 3 anschmiegt. Der Balg 2 wird von einer aus einer Basisplatte 4a und zwei Längsflanschen 4b gebildeten Halterung 4 gehalten, die ihrerseits auf einem pneumatisch schwenkbaren Haltearm 5 montiert ist. Über eine durch die Basisplatte 4a geführte Zuleitung 6 ist dem Balg Druckluft zuführbar und es ist erkennbar, daß der mit etwa 1 bar Druck gefüllte Balg sich sehr exakt an weite Bereiche der seitlichen Reifenseitenfläche anlehnt.

Bei laufender Bearbeitungsbewegung, nämlich einer Rotationsbewegung des gezeigten Reifens 1 um die Achse RA, werden durch die auf dem Balg befestigten Brech- oder Schneidkanten 3 die vom Fertigungsprozeß stammenden, überstehenden Entlüftungsnoppen 8 und Filmaustriebe 9 im Bereich der Reifenseitenflächen abgetragen. Der Entfernungsprozeß wird - wie bekannt - dadurch gefördert, daß die überstehenden Teile mit tiefkalten Medien, z.B. Flüssigstickstoff, zunächst abgekühlt und vesprödet werden - z.B. dadurch, daß das in der Figur nicht dargestellte, untere Reifenprofil ein Flüssiggasbad durchläuft.

Wie erkennbar ist, wird mit der hier vorgeschlagenen Einrichtung eine besonders konturangepaßte Entfernung von beim Herstellungsprozeß entstehenden Austrieben auf Reifen erreicht, wobei auch die besonders schwierige Seitenflächenentgratung optimal gelingt. Mit der erfindungsgemäßen Einrichtung, bzw. mit mehreren geeignet installierten Einrichtungen der gezeigten Art ist eine qualitativ hochwertige Entgratung aller Reifenbereiche möglich.

## Patentansprüche

1. Entgratungseinrichtung für eine Reifenentgratungsmaschine mit Schneid- oder Abriebwerkzeugen,
**dadurch gekennzeichnet**,
daß die Schneid- oder Abriebwerkzeuge (3) auf einem mit einem Druckmedium füllbaren Balg (2) angordnet sind, der seinerseits mit einer Halterung (4) verbunden ist, die ihn in aufgeblasenem Zustand in einer hinsichtlich der zu entgratenden Fläche geeigneten Orientierung hält, wobei der Balg eine Zuleitung (6) besitzt, mit der Druckmedium zu- bzw. abführbar ist, und wobei die Halterung mit dem Balg mit einer Haltekonstruktion (5) gekoppelt ist, mit der sie an die zu entgratenden Reifen heranführbar ist.

2. Entgratungseinrichtung nach Anspruch 1, **dadurch gekennzeichnet**, daß die Halterung aus einer Basisplatte (4a) mit aufgesetzten Flanschen (4b) besteht, wobei der Balg (2) in dem aus der Basisplatte und den Flanschen gebildeten Kanal befestigt ist.

3. Entgratungseinrichtung nach Anspruch 1, **dadurch gekennzeichnet,** daß die Halterung aus einem halbrohrartigen Element gebildet ist und der Balg (2) innenseitig befestigt ist.

4. Entgratungseinrichtung nach einem der Ansprüche 1 bis 3, **dadurch gekennzeichnet**, daß die Haltekonstruktion (5) für die Halterung (4) pneumatisch oder hydraulisch bewegbar ausgebildet ist.

## Claims

1. Trimming device for a tyre trimming machine with cutting or abrading tools, characterised in that the cutting or abrading tools (3) are disposed on a bellows (2) which can be filled with a pressure medium and for its part is connected to a mounting (4) which holds it when inflated in a suitable orientation with respect to the surface to be trimmed, the bellows having a feed line (6) with which the pressure medium can be introduced and removed, and the mounting being coupled to the bellows with a mounting structure (5) with which it can be guided up to the tyres to be trimmed.

2. Trimming device according to claim 1, characterised in that the mounting consists of a base plate (4a) carrying flanges (4b), the bellows (2) being fixed in the channel formed by the base plate and the flanges.

3. Trimming device according to claim 1, characterised in that the mounting is formed of a semi-tubular element and the bellows (2) is fixed on the inside.

4. Trimming device according to one of claims 1 to 3, characterised in that the mounting structure (5) for the mounting (4) is designed to be movable pneumatically or hydraulically.

## Revendications

1. Dispositif d'ébavurage pour un appareil d'ébavurage de bandages pneumatiques muni d'outils de coupe ou d'abrasion, caractérisé en ce que les outils de coupe ou d'abrasion (3) sont montés sur un soufflet (2) susceptible d'être rempli d'un fluide sous pression, ce soufflet étant relié de son côté à un support (4), qui le maintient, lorsqu'il est à l'état gonflé, selon une orientation adaptée à la surface à ébavurer, en ce que le soufflet comporte une conduite de liaison (6) susceptible d'être reliée à une source de fluide sous pression ou à une décharge de fluide sous pression, et en ce que le support muni du soufflet est accouplé à une structure de support (5), avec laquelle il est susceptible d'être déplacé vers le bandage pneumatique à ébavurer.

2. Dispositif d'ébavurage selon la revendication 1, caractérisé en ce que le support est constitué d'une plaque d'embase (4a) munie de flasques rapportés (4b), et en ce que le soufflet (2) est fixé dans le canal formé de la plaque d'embase et de collerettes ou flasques.

3. Dispositif d'ébavurage selon la revendication 1, caractérisé en ce que le support est constitué d'un élément semi-tubulaire et en ce que le soufflet (2) est fixé sur la (ou les) faces intérieure(s) (de l'élément).

4. Dispositif d'ébavurage selon l'une quelconque des revendications 1 à 3, caractérisé en ce que la structure de support (5) pour le support (4) est agencée pour être déplacée par voie pneumatique ou hydraulique.
